# EUROPÄISCHE PATENTSCHRIFT

(11) **EP 2 353 856 B1**
(45) Veröffentlichungstag und Bekanntmachung des Hinweises auf die Patenterteilung: **20.04.2016**
(21) Anmeldenummer: 10197020.0
(22) Anmeldetag: 27.12.2010
(51) Int. Cl.: B31B 39/00, A01G 5/06, A01G 5/04, B65D 85/50, B65D 81/22, A47G 7/06, B65D 33/06, B65D 81/26

(54) **Verfahren zur Herstellung eines taschenartigen Aufbewahrungsbehältnisses für Schnittpflanzen**
Procedure for the production of a pocket-like storage container for cut plants
Procédé pour la production d'un récipient de stockage en forme de poche pour des plantes coupées

(30) Priorität: 08.02.2010 CH 1542010
(43) Veröffentlichungstag der Anmeldung: 10.08.2011
(73) Patentinhaber: Schulter, Ruth, 78465 Konstanz-Dettingen (DE)
(72) Erfinder: Schmidt, Heinz-Dieter, 51750 Windeck-Dattenfeld (DE)
(74) Vertreter: Heisel, Wolfgang

(56) Entgegenhaltungen:
- EP-A1- 1 418 136
- US-A1- 2007 028 515
- US-A1- 2009 294 315

## Beschreibung

Die Erfindung betrifft ein Verfahren zur Herstellung eines taschenartigen Aufbewahrungsbehältnisses für Schnittpflanzen nach Patentanspruch 1 sowie ein mit diesem Verfahren hergestelltes taschenartigen Aufbewahrungsbehältnisses für Schnittpflanzen nach Patentanspruch 6.

Die Erfindung betrifft insbesondere ein Verfahren zur Herstellung eines taschenartigen Aufbewahrungsbehältnisses für Schnittblumen mit einer flexiblen Hülle aus einer wasserundurchlässigen thermoplastischen Folie und einer Innenbeschichtung aus einem saugfähigen Material, wobei das saugfähige Material einen durchtränkbaren Wasserspeicher für die Schnittblumen bildet. Dabei ist das saugfähige Material von einer wasserdurchlässigen Deckschicht aus thermoplastischem Kunststoff abgedeckt und die wasserundurchlässige thermoplastische Folie ist im Bereich einer Taschenöffnung nach innen über die Innenbeschichtung aus saugfähigem Material umgeschlagen und im Umschlagbereich mindestens einseitig mit der Deckschicht verbunden.

Ein derartiges Aufbewahrungsbehältnis für Schnittblumen ist aus der EP-0 625 117 bekannt. Die Schrift zeigt eine Ausführungsform bei der die flexible Hülle aus einem wasserundurchlässigen, vorzugsweise rutsch- und reissfesten und biologisch abbaubarem Material besteht. Das saugfähige Material ist vorzugsweise aus Zellstoff, insbesondere watteähnlichem Zellstoff, es sind aber auch andere Materialien wie Schaumstoff oder schwammartige Substanzen vorgesehen. Die wasserundurchlässige Hülle ist dabei im Bereich einer Taschenöffnung über das saugfähige Material umgeschlagen, um eine Rinne zu bilden, die ein Auslaufen des Wassers beim umgekehrten Halten des Blumenstrausses verhindern soll. Gegen innen ist die Schicht aus saugfähigem Material durch eine poröse oder perforierte Folie abgedeckt. Diese poröse Folie kann aus einem Kunststoff mit kleinen Löchern bestehen, geeignet sind aber auch Vliesstoffe in der Art eines Geotextils oder ein feines Gewebe. Die poröse Folie ist dabei im Bereich der Taschenöffnung mit dem Rand der wasserundurchlässigen Hülle innenseitig vom Umschlag durch Klebung oder Schweissung fest verbunden.

Die Herstellungsweise des Aufbewahrungsbehältnis für Schnittblumen ist in der EP-0 625 117 nicht offenbart. Es ist aber bekannt, dass bei gleich oder ähnlich aufgebauten Aufbewahrungsbehältnissen für Schnittblumen, so etwa bei den "freshbag"-Produkten der Firma Rotaris Marketing GmbH, die vorstehend genannten Materialschichten aufeinandergelegt und schliesslich zu beiden Seiten entlang von Längsrändern eine gegenseitige Verschweissung der wasserundurchlässigen Hüllen vorgenommen wird. Derartige Verschweissungen sind natürlich nur bei thermoplastischen Materialien möglich und sie bedingen zudem auch, dass zwischen den beiden zu verschweissenden Hüllenschichten keine nicht-verschweissbaren Materialien liegen. Deshalb werden gattungsgemässe Aufbewahrungsbehältnisse auch in einer Weise gefertigt, dass sich weder das saugfähige Material noch die das saugfähige Material bedeckende Deckschicht auf Bereiche der wasserundurchlässigen flexiblen Hülle erstrecken, in die die Schweissnähte zu liegen kommen. Es hat sich aber herausgestellt, dass es an den Schweissnähten wegen den sehr geringen Schichtdicken der flexiblen Hülle leicht zu Unregelmässigkeiten des Schweissnahtverlaufs und damit in der Folge auch zu kleinen Löchern und Undichtigkeiten kommt. Herausrinnendes Wasser aus solchen Undichtigkeiten wird natürlich als störend wahrgenommen.

Weiterhin offenbart die US-2007/028515 eine wasserspeichernde gel-freie Schutz-Umhüllung, die dazu dient, in Schachteln zu transportierende Blumen frisch zu erhalten. Die wasserspeichernde Schutzumhüllung kann um die Blumenstile gelegt werden oder auch zu Taschen geformt werden. Dabei besteht die wasserspeichernde Schutzumhüllung aus einer wasserdichten äusseren Schicht, einer wasserdurchlässigen inneren Schicht und einem zwischenliegenden flüssigkeits-absorbierenden Kissen. Die wasserspeichernde Schutzumhüllung hat aber keine spezielle Ausformungen um das ungewollte Herausrinnen von Wasser möglichst gering zu halten oder sogar ganz zu vermeiden. Die Qualität der Schweissnähte ist in dieser Offenbarung auch nicht thematisiert.

Schliesslich offenbart die EP-1 418 136 eine wasserdichte Hülle in der Form einer Tasche oder Tüte für Spargeln. Die wasserdichte Hülle besteht aus einem wasserdichten Hüllenseitenmaterial, einem zwischenliegenden saugfähigen Material und einer innenliegenden osmotischen Membran zur Abdeckung resp. Abgrenzung des saugfähigen Materials. Zwar sind hier Massnahmen gegen ein allfälliges Auslaufen von Wasser vorgesehen, aber es sind keine Massnahmen zur Verbesserung der Schweissnahtqualität offenbart.

Es ist deshalb die Aufgabe der Erfindung, ein Verfahren zur Herstellung eines taschenartigen Aufbewahrungsbehältnisses für Schnittpflanzen anzugeben, das die erwähnten Nachteile nicht mehr aufweist. Zudem soll ein nach dem neuen Verfahren hergestelltes taschenartiges Aufbewahrungsbehältnis für Schnittpflanzen angegeben werden, mit dem das Handling auch im Gebrauch verbessert ist.

Diese Aufgabe wird durch die Merkmale der Patentansprüche 1 und 5 gelöst. Das erfindungsgemässe Verfahren geht davon aus, dass das halbfertige Produkt, im Folgenden auch 'Halbfabrikat' genannt, entlang von Längsrändern derart verschweisst wird, dass im Bereich der Schweissnaht zwei Schichten der wasserdurchlässigen Deckschicht zwischen zwei Schichten der wasserundurchlässigen Folie liegen. Da vorgesehen ist, sowohl die wasserundurchlässige flexible Hülle wie auch die wasserdurchlässige Deckschicht aus thermoplastischen, verschweissbaren Materialien zu fertigen, ergibt sich im Bereich der Schweissnähte eine grössere Gesamtschichtdicke, was zu einer geringeren Anfälligkeit gegenüber Unregelmässigkeiten beim Schweissvorgang führt.

Da, wie oben erwähnt, das saugfähige Material sowohl in zusammenhaltenden Einzelschichten (z.B. Zellstoffschichten) wie auch als bloss sehr locker zusammenhaltende Schicht aus flockigem Material (z.B. watteähnlichem Zellstoff) vorliegen kann, kann es allein schon aus Gründen des Materialhandlings im Arbeitsvorbereitungsprozess sinnvoll sein, zu beiden Seiten des saugfähigen Materiales eine Deck- oder Trennschicht vorzusehen. Die vorstehend genannte Verbesserung der Schweissnahtqualität durch Vergrösserung der Gesamtschichtdicke im Schweissnahtbereich könnte also durch die zusätzliche Verwendung einer thermoplastischen Trennschicht noch weiter erhöht werden. Eine Verbesserung im Handling während des Herstellungsprozesses durch Verminderung von Abflockung entlang von Schnittkanten lässt sich so aber in jedem Fall erzielen.

Schliesslich kann in einem weiteren oder mehreren weiteren Verfahrensschritten ein Öffnungshilfsmittel an beiden Aussenseiten des taschenartigen Aufbewahrungsmittels angebracht werden. Dabei kann das Öffnungshilfsmittel als Lasche, als Fingerlasche oder als Fingertasche ausgebildet sein. Ein derartig ausgestaltetes Öffnungshilfsmittel erlaubt es, dass das erfindungsgemässe taschenartige Aufbewahrungsbehältnis für Schnittpflanzen mit nur einer Hand soweit geöffnet werden kann, dass mit der anderen Hand Wasser oder Schnittpflanzen eingefüllt werden können. Im Folgenden wird ein Ausführungsbeispiel des erfindungsgemässen Verfahrens zur Herstellung eines taschenartigen Aufbewahrungsbehältnisses für Schnittpflanzen anhand von Figuren näher beschrieben. Dabei zeigt
- Fig. 1a und b: einen erster Verfahrensschritt,
- Fig. 2a und b: einen zweiten Verfahrensschritt,
- Fig. 3a und b: einen dritten Verfahrensschritt,
- Fig. 4a und b: einen vierten und fünften Verfahrensschritt,
- Fig. 5a und b: einen sechsten und siebten Verfahrensschritt in der Herstellung des taschenartigen Aufbewahrungsbehältnisses, und
- Fig. 6a und b: das taschenartige Aufbewahrungsbehältnis nach der Anbringung eines Offnungshilfsmittels an den beiden Aussenseiten.

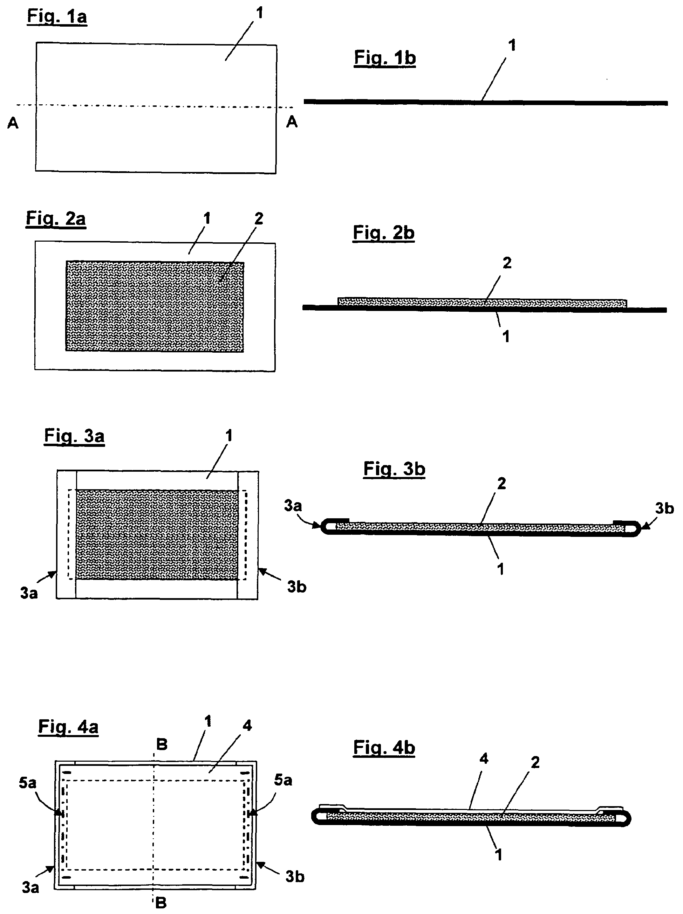

Die Figuren 1 bis 5 zeigen die einzelnen Verfahrenschritte zur Herstellung eines taschenartigen Aufbewahrungsbehältnisses für Schnittpflanzen, und zwar pro Verfahrensschritt in einer Draufsicht (a) und in einem Längsschnitt (b). Die Darstellungen sind nicht massstäblich.

In einem ersten Verfahrensschritt wird gemäss den Figuren 1a und 1 b ein erstes rechteckiges Formteil aus wasserundurchlässiger Folie 1 bereit gestellt. Die Figur 1 b zeigt dabei einen Längsschnitt entlang einer Schnittlinie A-A. Die wasserundurchlässige Folie 1 ist aus einem thermoplastischen, verschweissbaren, dünnen und flexiblen Material wie beispielsweise Polyethylen (PE).

In einem zweiten Verfahrensschritt wird gemäss den Figuren 2a und 2b ein zweites rechteckiges Formteil aus saugfähigem Material 2 bereit gestellt und auf die wasserundurchlässige Folie 1 gelegt, wobei das zweite Formteil von gleicher Geometrie, aber soviel kleiner als das erste Formteil ist, dass ein umlaufender freibleibender Rand der wasserundurchlässigen Folie 1 verbleibt. Das saugfähige Material 2 ist beispielsweise eine Zellstoffmatte oder ein watteähnlicher Zellstoff, es sind aber auch andere Materialien wie Schaumstoff oder schwammartige Substanzen möglich.

In einem dritten Verfahrensschritt wird gemäss den Figuren 3a und 3b die wasserundurchlässige Folie 1 an zwei gegenüberliegenden Querrändem 3a,b über die Innenbeschichtung aus saugfähigem Material 2 umgeschlagen.

In einem vierten Verfahrensschritt wird gemäss den Figuren 4a und 4b ein drittes rechteckiges Formteil aus wasserdurchlässiger Deckschicht 4 aus thermoplastischem Kunststoff im wesentlichen deckend über das in den vorhergehenden Schritten bereitgestellt saugfähige Material 2 wie auch über die umgeschlagenen und die nicht-umgeschlagenen Teile der wasserundurchlässigen Folie 1 gelegt. Die wasserdurchlässige Deckschicht ist aus einem netzartigen, thermoplastischen, verschweissbaren, dünnen und flexiblen Material wie beispielsweise Polyethylen (PE) oder Polypropylen (PP) und kann als dünne Vliesschicht vorliegen.

In einem fünften Verfahrensschritt wird gemäss der Figur 4a die wasserdurchlässige Deckschicht 4 mit der wasserundurchlässigen Folie 1 mindestens an den zwei gegenüber liegenden Querrändem 3a,b des ersten Formteiles befestigt. Die jeweiligen Befestigungsregionen 5a,b sind mit strichpunktierten Linien bezeichnet. Diese Befestigung kann durch Kleben oder Schweissen erfolgen. Das so entstandene halbfertige Produkt wird im Folgenden als Halbfabrikat bezeichnet. Selbstverständlich könnten sich die Befestigungsregionen auch rund um das saugfähige Material 2 erstrecken, das dürfte aber nicht notwendig sein, weil sich bereits mit der gezeigten Art der Befestigung eine gegenseitige relative Verschiebung der wasserundurchlässigen Folie 1, des saugfähigen Materials 2 und der wasserdurchlässigen Deckschicht vermeiden lässt.

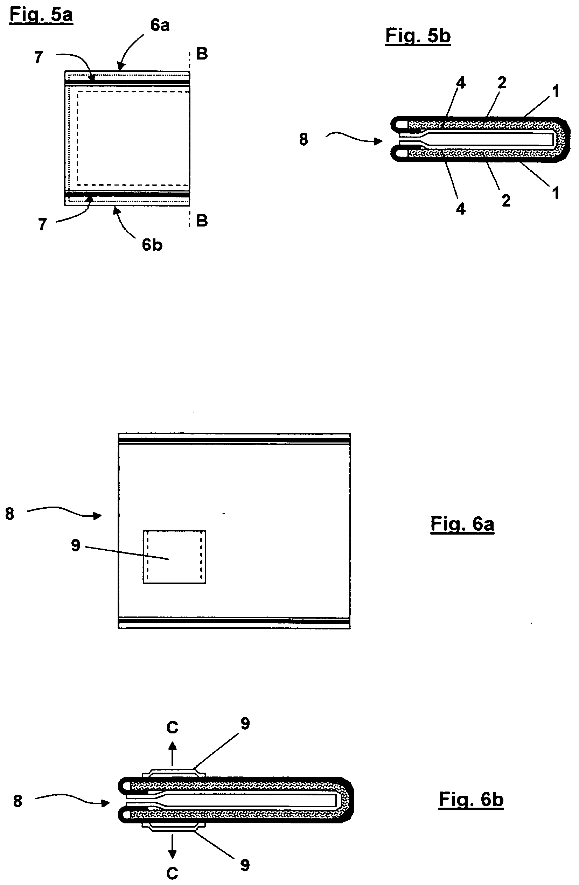

In einem sechsten Verfahrensschritt wird gemäss den Figuren 4a, 5a und 5b das Halbfabrikat entlang einer Mittellinie B-B derart gefaltet, dass sich die wasserdurchlässigen Deckschichten 4 berühren.

In einem siebten Verfahrensschritt wird das gefaltete Halbfabrikat entlang von Längsrändern 6a,b derart verschweisst, dass beidseitig im Bereich einer Schweissnaht 7 zwei Schichten der wasserdurchlässigen Deckschicht 4 zwischen zwei Schichten der wasserundurchlässigen Folie 1 liegen. Das ist im Wesentlichen selbst in den gemäss dem dritten Verfahrensschritt umgeschlagenen Bereichen in der Umgebung einer Taschenöffnung 8 der Fall. Es ist somit gewährleistet, dass die gewünschte Verbesserung der Schweissnahtqualität durch Vergrösserung der Gesamtschichtdicke im Schweissnahtbereich erreicht wird.

Das saugfähige Material 2, das im zweiten Verfahrenschritt verwendet wird, kann, wie bereits erwähnt, sowohl in zusammenhaltenden Einzelschichten (z.B. als Zellstoffschichten) wie auch als bloss sehr locker zusammenhaltende Schicht aus flockigem Material (z.B. watteähnlichem Zellstoff) vorliegen. Flockiges oder watteähnliches Material hat aber oft einen relativ schlechten Materialzusammenhalt, weshalb es zur Verbesserung des Handlings sinnvoll sein kann, zu beiden Seiten des saugfähigen Materiales eine Deck- oder Trennschicht vorzusehen. Das könnte insbesondere dann der Fall sein, wenn das saugfähige Material separat vorbereitet wird. Hinsichtlich des vorstehend beschriebenen Verfahrens läuft es auf das Gleiche hinaus, als ob man vor dem zweiten Verfahrensschritt eine Trennschicht (nicht dargestellt) auf die wasserundurchlässige Folie auflegen würde. Für diese Trennschicht gibt es keine Einschränkungen hinsichtlich der Materialwahl, sie kann also beispielsweise auch eine einfache Papier- oder Zelluloselage sein.

Grundsätzlich ist es möglich dass die Befestigung im fünften Verfahrensschritt mit einem Klebe- oder mit einem Schweissverfahren erfolgt. Da sowohl die wasserundurchlässigen Folie 1 wie auch die wasserdurchlässige Deckschicht 4 aus Thermoplasten bestehen, ist ein Schweissverfahren jedoch bevorzugt.

Schliesslich ist es auch möglich, in einem oder mehreren weiteren Verfahrensschritten Öffnungshilfsmittel an beiden Aussenseiten des taschenartigen Aufbewahrungsmittels anzubringen. Öffnungshilfsmittel sind Mittel, die es erleichtern sollen, das taschenartige Aufbewahrungsbehältnis für Schnittblumen manuell zu öffnen oder offen zu halten, vorzugsweise unter Einsatz von nur einer Hand, so dass mit der anderen Hand beispielsweise Wasser eingegossen oder Blumen eingesteckt werden können. Derartige Öffnungshilfsmittel dürfen natürlich die Integrität der wasserundurchlässigen Folie 1 nicht beeinträchtigen, weil sonst die Bemühungen, ungewollten Wasseraustritt beim verpackten Blumenstrauss zu verhindern, wieder zunichte gemacht würden.

Schliesslich ist es auch möglich, dem saugfähigen Material (2) ein Frischhaltemittel zuzusetzen. Dies geschieht vorzugsweise vor dem zweiten Verfahrensschritt, also bevor das saugfähige Material (2) auf die wasserundurchlässige Folie (1) gelegt wird. Das hat den Vorteil, dass für die Herstellung des taschenartigen Aufbewahrungsbehältnisses alle Formteile vorkonfektioniert bereitstellbar sind.

Als Öffnungshilfsmittel im allgemeinen Sinn können jedoch beispielsweise auch beidseitig angebrachte Bänder angesehen werden. Sie sind zwar für einhändigen Gebrauch ungeeignet, erlauben dafür aber das Zubinden des eingesteckten Blumenstrausses.

Die Figuren 6a und 6b zeigen ein erfindungsgemässes taschenartiges Aufbewahrungsbehältnis für Schnittblumen mit einhändig benutzbaren Öffnungshilfsmitteln in der Form von Fingerlaschen 9. Diese Fingerlaschen 9 sind im Bereich der Taschenöffnung 8 beidseitig am Aufbewahrungsbehältnis angebracht. Dazu kann beispielsweise an jeder Seite ein weiteres kleines Formteil aus dem gleichen Material wie die wasserundurchlässige Folie 1 aufgeklebt oder aufgeschweisst werden. Im Gebrauch werden Daumen und Zeigefinger einer Hand in die Fingerlaschen 9 hineingesteckt und die Taschenöffnung 8 wird in die Öffnungsrichtungen C auseinander gezogen.

Der erfindungsgemässe Beutel kann selbstverständlich nicht nur für die Aufbewahrung von Schnittblumen, sondern beispielsweise auch für die Aufbewahrung und Frischhaltung von Gemüsen wie Spargeln und dergleichen verwendet werden.

### Bezugsziffernliste:

- 1: wasserundurchlässige Folie
- 2: saugfähiges Material
- 3a,b: Querränder
- 4: wasserdurchlässige Deckschicht
- 5a,b: Befestigungsregionen
- 6a,b: Längsränder
- 7: Schweissnaht
- 8: Taschenöffnung
- 9: Fingerlaschen

- A-A: Schnittlinie (in Längsrichtung)
- B-B: Mittellinie (in Querrichtung)
- C,C: Öffnungsrichtung

## Patentansprüche

1. Verfahren zur Herstellung eines taschenartigen Aufbewahrungsbehältnisses für Schnittpflanzen mit einer flexiblen Hülle aus einer wasserundurchlässigen thermoplastischen Folie (1) und einer Innenbeschichtung aus einem saugfähigen Material (2), wobei das saugfähige Material (2) einen durchtränkbaren Wasserspeicher für die Schnittblumen bildet und von einer wasserdurchlässigen Deckschicht (4) aus thermoplastischem Kunststoff abgedeckt ist, und wobei die wasserundurchlässige thermoplastische Folie (1) im Bereich einer Taschenöffnung (8) nach innen über die Innenbeschichtung aus saugfähigem Material (2) umgeschlagen ist und im Umschlagbereich mindestens einseitig mit der Deckschicht (4) verbunden ist, **dadurch gekennzeichnet, dass**
- in einem ersten Verfahrensschritt ein erstes rechteckiges Formteil aus wasserundurchlässiger Folie (1) bereit gestellt wird,
- in einem zweiten Verfahrensschritt ein zweites rechteckiges Formteil aus saugfähigem Material (2) bereit gestellt und auf die wasserundurchlässige Folie (1) gelegt wird, wobei das zweite Formteil von gleicher Geometrie, aber soviel kleiner als das erste Formteil ist, dass ein umlaufender freibleibender Rand der wasserundurchlässigen Folie (1) verbleibt,
- in einem dritten Verfahrensschritt die wasserundurchlässige Folie (1) an zwei gegenüberliegenden Querrändern (3a,b) über die Innenbeschichtung aus saugfähigem Material (2) umgeschlagen wird,
- in einem vierten Verfahrensschritt ein drittes rechteckiges Formteil aus wasserdurchlässiger Deckschicht (4) aus thermoplastischem Kunststoff im wesentlichen deckend über das in den vorhergehenden Schritten bereitgestellt saugfähige Material (2) wie auch über die umgeschlagenen und die nichtumgeschlagenen Teile der mit der wasserundurchlässigen Folie (1) gelegt wird,
- in einem fünften Verfahrensschritt die wasserdurchlässige Deckschicht 4 mit der wasserundurchlässigen Folie 1 mindestens an den zwei gegenüber liegenden Querrändern 3a,b des ersten Formteiles befestigt wird, so dass ein Halbfabrikat entsteht,
- in einem sechsten Verfahrensschritt das Halbfabrikat entlang einer Mittellinie (B-B) derart gefaltet wird, dass sich die wasserdurchlässigen Deckschichten (4) berühren, und
- in einem siebten Verfahrensschritt das gefaltete Halbfabrikat entlang von Längsrändern (6a,b) derart verschweisst wird, dass im Bereich von Schweissnähten (7) zwei Schichten der wasserdurchlässigen Deckschicht (4) zwischen zwei Schichten der wasserundurchlässigen Folie (1) liegen.

2. Verfahren nach Patentanspruch 1, **dadurch gekennzeichnet, dass** vor dem zweiten Verfahrensschritt eine Trennschicht auf die wasserundurchlässige Folie (1) aufgelegt wird.

3. Verfahren nach Patentanspruch 1, **dadurch gekennzeichnet, dass** vor dem zweiten Verfahrensschritt dem saugfähigen Material (2) ein Frischhaltemittel zugesetzt wird.

4. Verfahren nach Patentanspruch 1, **dadurch gekennzeichnet, dass** im fünften Verfahrensschritt ein Schweissverfahren angewendet wird.

5. Verfahren nach einem der Patentansprüche 1 bis 4, **dadurch gekennzeichnet, dass** in einem oder mehreren weiteren Verfahrensschritten Öffnungshilfsmittel an beiden Aussenseiten des taschenartigen Aufbewahrungsmittels angebracht werden.

6. Taschenartiges Aufbewahrungsbehältnis für Schnittblumen, hergestellt nach dem Verfahren gemäss Patentanspruch 1 aus einem gefalteten und entlang von Längsrändern (6a,b) verschweissten Halbfabrikat aus einer wasserundurchlässigen thermoplastischen Folie (1), einem saugfähigen Material (2) und einer wasserdurchlässigen Deckschicht (4) aus thermoplastischem Kunststoff, wobei
- beim Halbfabrikat die Schicht aus saugfähigem Material (2) zwischen der Schicht aus wasserundurchlässiger Folie (1) und der wasserdurchlässigen Deckschicht (4) angeordnet ist, und wobei
- beim Aufbewahrungsbehältnis die wasserundurchlässige Folie (1) im Bereich der Taschenöffnung (8) nach innen über die Schicht aus saugfähigem Material (2) umgeschlagen ist und im Umschlagbereich mindestens einseitig mit der Deckschicht (4) verbunden ist,
**dadurch gekennzeichnet, dass**
beim Aufbewahrungsbehältnis das Halbfabrikat entlang einer Mittellinie (B) gefaltet und die Längsränder (6a,6b) derart verschweisst sind, dass im Bereich der Schweissnaht (7) zwei Schichten der wasserdurchlässigen Deckschicht (4) zwischen zwei Schichten der wasserdichten Folie (1) liegen.

7. Taschenartiges Aufbewahrungsbehältnis für Schnittblumen nach Patentanspruch 6, **dadurch gekennzeichnet, dass** im Bereich der Taschenöffnung einhändig betätigbare Öffnungshilfsmittel in der Form einer Lasche, einer Fingerlasche (9) oder einer Fingertasche vorhanden sind.

## Claims

1. Method for producing a pocket-like storage container for cut plants, having a flexible sheath of a water-impermeable thermoplastic film (1) and an internal coating of an absorbent material (2), wherein the absorbent material (2) forms a saturable water reservoir for the cut flowers and is covered by a water-permeable cover layer (4) of a thermoplastic plastics material, and wherein the water-impermeable thermoplastic film (1) in the region of a pocket opening (8) is inwardly folded back over the internal coating of saturable material (2) and in the folded-back region is at least on one side connected to the cover layer (4),
**characterized in that**
- in a first method step a first rectangular shaped part of a water-impermeable film (1) is provided;
- in a second method step a second rectangular shaped part of an absorbent material (2) is provided and placed onto the water-impermeable film (1), wherein the second shaped part is of the same geometry as the first shaped part but so much smaller than the latter that an encircling unoccupied periphery of the water-impermeable film (1) remains;
- in a third method step the water-impermeable film (1) on two mutually opposite transverse peripheries (3a,b) is folded back over the internal coating of absorbent material;
- in a fourth method step a third rectangular shaped part of a water-permeable cover layer (4) of thermoplastic plastics material is placed in a substantially covering manner over the absorbent material (2) provided in the preceding steps as well as over those parts of the water-impermeable film (1) that have been folded back as well as not been folded back;
- in a fifth method step the water-permeable cover layer (4) having the water-impermeable film (1) is fastened at least at the two mutually opposite transverse peripheries (3a,b) of the first shaped part such that a semi-finished product is created;
- in a sixth method step the semi-finished product is folded along a centreline (B-B) in such a manner that the water-permeable cover layers (4) are in mutual contact; and
- in a seventh method step the folded semi-finished product is welded along longitudinal peripheries (6a,b) in such a manner that in the region of weld seams (7) two layers of the water-permeable cover layer (4) lie between two layers of the water-impermeable film (1).

2. Method according to Claim 1, **characterized in that** prior to the second method step a barrier layer is applied to the water-impermeable film (1).

3. Method according to Claim 1, **characterized in that** prior to the second method step a freshness preservation agent is added to the absorbent material (2).

4. Method according to Claim 1, **characterized in that** in the fifth method step a welding method is applied.

5. Method according to one of Claims 1 to 4, **characterized in that** in one or a plurality of further method steps auxiliary means for opening are attached to both external sides of the pocket-like storage means.

6. Pocket-like storage container for cut flowers, produced according to the method according to Claim 1 from a folded semi-finished product which is welded along longitudinal peripheries (6a,b) and made from a water-impermeable thermoplastic film (1), an absorbent material (2), and a water-permeable cover layer (4) of thermoplastics plastic material, wherein
- in the case of the semi-finished product, the layer of absorbent material (2) is disposed between the layer of water-impermeable film (1) and the water-permeable cover layer (4), and wherein
- in the case of the storage container, the water-impermeable film (1) in the region of the pocket opening (8) is inwardly folded back over the layer of absorbent material (2) and in the folded-back region is at least on one side connected to the cover layer (4),
**characterized in that**
in the case of the storage container, the semi-finished product is folded along a centreline (B) and the longitudinal peripheries (6a, 6b) are welded in such a manner that in the region of the weld seam (7) two layers of the water-permeable cover layer (4) lie between two layers of the watertight film (1).

7. Pocket-like storage container for cut flowers according to Claim 6, **characterized in that** in the region of the pocket opening auxiliary means for opening, which are operable with one hand, are present in the form of a tab, a finger tab (9), or a finger pocket.

## Revendications

1. Procédé pour la production d'un récipient de stockage en forme de poche pour plantes coupées comprenant une enveloppe flexible constituée d'un film thermoplastique imperméable à l'eau (1) et d'un revêtement intérieur constitué d'un matériau absorbant (2), le matériau absorbant (2) formant un accumulateur d'eau pouvant être imprégné pour les fleurs coupées et étant recouvert d'une couche de recouvrement perméable à l'eau (4) en un plastique thermoplastique, et le film thermoplastique imperméable à l'eau (1), dans la région d'une ouverture de poche (8), étant replié vers l'intérieur par-dessus le revêtement intérieur constitué de matériaux absorbant (2) et étant connecté dans la région du repliement au moins d'un côté à la couche de recouvrement (4),
**caractérisé en ce que**
- dans une première étape de procédé, une première pièce moulée rectangulaire en film imperméable à l'eau (1) est fournie,
- dans une deuxième étape de procédé, une deuxième pièce moulée rectangulaire en matériau absorbant (2) est fournie et est placée sur le film imperméable à l'eau (1), la deuxième pièce moulée ayant la même géométrie mais étant plus petite que la première pièce moulée, dans une mesure telle qu'un bord périphérique exposé du film imperméable à l'eau (1) subsiste,
- dans une troisième étape de procédé, le film imperméable à l'eau (1) est replié au niveau de deux bords transversaux opposés (3a, b) par-dessus le revêtement intérieur en matériau absorbant (2),
- dans une quatrième étape de procédé, une troisième pièce moulée rectangulaire constituée de la couche de recouvrement perméable à l'eau (4), en plastique thermoplastique est placée essentiellement en alignement par-dessus le matériau absorbant (2) fourni dans les étapes précédentes ainsi que par-dessus les parties repliées et non repliées du film imperméable à l'eau (1),
- dans une cinquième étape de procédé, la couche de recouvrement perméable à l'eau (4) avec le film imperméable à l'eau (1) est fixée au moins au niveau des deux bords transversaux opposés (3a, b) de la première pièce moulée de telle sorte que l'on obtienne un produit semi-fini,
- dans une sixième étape de procédé, le produit semi-fini est plié le long d'une ligne médiane (B-B) de telle sorte que les couches de recouvrement perméable à l'eau (4) soient en contact l'une avec l'autre, et
- dans une septième étape de procédé, le produit semi-fini plié est soudé le long de bords longitudinaux (6a, b) de telle sorte que dans la région des joints de soudure (7), deux couches de la couche de recouvrement perméable à l'eau (4) soient situées entre deux couches du film imperméable à l'eau (1).

2. Procédé selon la revendication 1, **caractérisé en ce qu'**avant la deuxième étape de procédé, une couche de séparation est placée sur le film imperméable à l'eau (1).

3. Procédé selon la revendication 1, **caractérisé en ce qu'**avant la deuxième étape de procédé, on ajoute au matériau absorbant (2) un moyen de conservation de fraîcheur.

4. Procédé selon la revendication 1, **caractérisé en ce que** dans la cinquième étape de procédé, on utilise un procédé de soudage.

5. Procédé selon l'une quelconque des revendications 1 à 4, **caractérisé en ce que** dans une ou plusieurs autres étapes de procédé, des agents d'ouverture sont appliqués au niveau des deux côtés extérieurs du moyen de conservation en forme de poche.

6. Récipient de stockage en forme de poche pour fleurs coupées, fabriqué selon le procédé selon la revendication 1 à partir d'un produit semi-fini plié et soudé le long de bords longitudinaux (6a, b) à partir d'un film thermoplastique imperméable à l'eau (1), d'un matériau absorbant (2) et d'une couche de recouvrement perméable à l'eau (4) en plastique thermoplastique,
dans lequel
- dans le cas du produit semi-fini, la couche de matériau absorbant (2) est disposée entre la couche de film imperméable à l'eau (1) et la couche de recouvrement perméable à l'eau (4), et dans lequel
- dans le cas du récipient de stockage, le film imperméable à l'eau (1) est replié dans la région de l'ouverture de poche (8) vers l'intérieur par-dessus la couche de matériau absorbant (2) et est connecté dans la région du repliement au moins d'un côté à la couche de recouvrement (4),
**caractérisé en ce que**
dans le cas du récipient de stockage, le produit semi-fini est plié le long d'une ligne médiane (B) et les bords longitudinaux (6a, 6b) sont soudés de telle sorte que dans la région du joint de soudure (7), deux couches de la couche de recouvrement perméable à l'eau (4) soient situées entre deux couches du film imperméable à l'eau (1).

7. Récipient de stockage en forme de poche pour fleurs coupées selon la revendication 6, **caractérisé en ce que** dans la région d'ouverture de poche, des moyens d'ouverture pouvant être actionnés d'une seule main sont prévus sous la forme d'une languette, d'une prise pour les doigts (9) ou d'une poche pour les doigts.
